# EUROPEAN PATENT SPECIFICATION

(11) **EP 2 824 134 B1**
(45) Date of publication and mention of the grant of the patent: **09.09.2015**
(21) Application number: 13175658.7
(22) Date of filing: 09.07.2013
(51) Int. Cl.: C08J 9/00, C08L 23/28, F16L 59/14, E04B 1/88

(54) **Compressible fire retardant foam**
Komprimierbarer Brandschutzschaum
Mousse ignifuge compressible

(43) Date of publication of application: 14.01.2015
(73) Proprietor: Armacell Enterprise GmbH & Co. KG, 12529 Schönefeld OT Waltersdorf (DE)
(72) Inventor: Quante, Heribert, 37696 Marienmünster (DE); Bettermann, Miroslav, 47138 Duisburg (DE); Zauner, Christoph, 48366 Laer (DE)
(74) Representative: von Füner, Nicolai

(56) References cited:
- GB-A- 1 269 136
- US-A1- 2004 097 605
- US-A1- 2012 135 221
- DATABASE WPI Week 200314 Thomson Scientific, London, GB; AN 2003-145680 XP002717753, & KR 2002 0072930 A (JO B W) 19 September 2002 (2002-09-19)

## Description

The present invention relates to a material for thermal and/or acoustic insulation comprising an expanded polymer (blend) based on chlorinated polyethylene and further chlorinated organic polymers, the process of manufacturing such material, and the use of such a material.

Expanded, polymeric insulation materials comprise mainly two groups of materials, flexible elastomeric foams (FEFs) and polyethylene foams (PEFs).

Flexible elastomeric foams (FEFs) are flexible insulation materials with a high filler loading, achieved by a chemical expansion (foaming) process. Such materials are almost exclusively based on a narrow selection of polymer bases. The majority of such expanded materials are based upon NBR or NBR/PVC (e.g. NH/Armaflex®, AF/Armaflex®, K-Flex® ST, Kaiflex® KK) and EPDM (e.g. HT/Armaflex®, Aeroflex®). Expanded EPDM is mainly used for higher temperature insulation, e.g. solar applications, whereas NBR is the most widespread polymer base for standard FEFs, such as in heating and plumbing and ventilation and cooling applications.

There are several reasons for the domination of NBR: It is tolerant in blending with various fillers, polymers, plasticizers and additives. NBR can e.g. be blended with PVC, having a positive impact on the expansion process by melting and therefore allowing the production of low density materials (< 50kg/m³) in a chemical expansion process in spite of high filler loadings. Furthermore, such materials show good mechanical properties as well as physical and chemical stability at very economic costs. Moreover, NBR and NBR/PVC can be blended with high levels of fillers and flame retardants to achieve a high level of flame resistance.

Nevertheless, NBR is showing several drawbacks when it is compared to other (elastomeric) polymers: Flame retardant NBR materials create a high level of black smoke and NBR itself is forming hydrogen cyanide in case of burn. Furthermore, NBR shows some drawbacks concerning temperature and UV stability, amongst others due to the high level of unsaturation.

EPDM shows some advantages compared to NBR or NBR/PVC. In addition to the temperature resistance already mentioned above, such materials show a higher UV and aging resistance and can therefore be used for outdoor applications without any additional coverings.

An important disadvantage of using EPDM is the worse fire performance of the commercially available insulation products, e.g. HT/Armaflex® (according to EN 13823: D-s3,d0) or Kaiflex® EPDMplus (according to EN 13823: E). The fire performance of EPDM products is limited by two effects: On the one hand EPDM rubber itself is higher flammable than heteroatom containing rubbers like NBR or CR. On the other hand the usage of e.g. halogenated flame retardants or phosphorous containing flame retardants/plasticisers is limited by their polarities and thereby compatibility to EPDM. Additionally, EPDM is forming exceptionally high quantities of CO in case of bum. Besides that, insulation properties and water vapor resistance are on a lower level compared to NBR or NBR/PVC (according to DIN EN ISO 8487 at 0° C: AF/Armaflex®: ≤0,033 W/m*K; HT/Armaflex®: ≤0,038 W/m*K; according to DIN EN ISO 12572: AF/Armaflex®: µ≥10.000; HT/Armaflex®: µ≥4.000) and they tend to shrink to a higher degree.

New developments of FEFs comprise the use of CR (polychloroprene) and blends of other halogenated, unsaturated elastomers to improve the fire resistance and significantly reduce smoke development (Armaflex® Ultima).

These materials can overcome the disadvantages of aforementioned materials concerning the smoke generation while maintaining a very high level of flame resistance (Armaflex® Ultima, EN 13823: B-s1,d0). Nevertheless, even such materials show some of the aforementioned drawbacks: temperature, UV (ultraviolet radiation), weathering and aging resistance are on a lower level compared to EPDM. In comparison to NBR and NBR/PVC, insulation and water vapor properties are worse (according to DIN EN ISO 8487 at 0° C: AF/Armaflex®: ≤0,033 W/m*K; Armaflex® Ultima: ≤0,040 W/m*K; according to DIN EN ISO 12572: AF/Armaflex®: µ≥10.000; Armaflex® Ultima: µ>7.000).

The second group of insulation materials, called polyethylene foams (PEFs), is made by physical expansion (foaming), using physical blowing agents. Such materials comprise a very low level of fillers on account of the fact that fillers lead to an overnucleation and therefore collapse of the material. Due to the limited possibilities of loading such materials with fillers, plasticizers, etc., the possibilities of modifying their properties are very limited. Therefore, the flexibility of PEFs in comparison to FEFs is worse, leading to disadvantages, e.g. due to a significantly higher amount of cuttings during installation, which is a drawback in terms of installation time and costs. In addition, the adhesion of PE (polyethylene) is in general difficult, leading again to some drawbacks in comparison to FEFs.

Commercially available products (e.g. Tubolit® DG-B1, Kaifoam® PE) also show some drawbacks concerning fire resistance (according to EN 13823: Tubolit® DG-B1: D-s3,d0; Kaifoam® PE: E) in comparison to FEF materials.

New developments in PEFs (e.g. Climaflex®) overcome the disadvantages regarding the fire resistance (according to EN 13823: Climaflex®: B-s1, d0). Nevertheless, such materials still do not overcome the aforementioned disadvantages concerning flexibility and workability.
Thermal conductivity of PEFs is even higher compared to FEF materials (according to DIN EN ISO 8487 at 10°C: AF/Armaflex®: ≤0,034 W/m*K; Climaflex®: ≤0,036 W/m*K). Another disadvantage of PEFs is the limited applicability at high and low temperatures (according to EN 14707: AF/Armaflex®: -50°C - 110°C; HT/Armaflex:-50(-200)°C - 150°C; Climaflex®: 0°C - 100°C). Due to the fact that the material is not crosslinked (in contrast to FEFs), the high temperature limit is determined by the softening or melting temperature of the polymer, while the low temperature limit is caused by the hardening of the polymer and the worse water vapor transmission (WVT) value. The use of PEFs would lead to under insulation corrosion (UIC) through condensation of humidity, on the one hand due to the low WVT values and on the other hand due to the worse adhesiveness.

Besides, PEFs need a storage time of several weeks for outgassing the (usually flammable) blowing agents, while FEFs can theoretically be used directly after production. Last but not least, PEFs are only available as tubes, insulation sheets comparable to FEFs are not commercially available (FEFs: AF/Armaflex®: 3 - 50mm; Kaiflex® ST: 3 - 50mm). This is mainly caused by the low flexibility and therefore impossibility to bend it around tubes, vessels, etc.

Some approaches were made to improve the properties of such materials. GB 1453070 describes the production of a chemically crosslinked and expanded polyethylene / polybutadiene material. Such approach overcomes the disadvantages of PEFs concerning the higher temperature resistance; nevertheless, such materials still have a worse flammability resistance due to very low levels of fillers, additives and / or plasticizers (see GB1453070, table 1 and 2). By using polybutadiene within the material, the flexibility can be improved. However, such materials still have a worse adhesiveness and the use of polybutadiene has a negative impact on UV, weathering and aging resistance (see GB1453070, table 1). Additionally, the manufacturing of such materials needs counterpressure during expansion, which is not an applicable method for the production of tubes in general and large-scale production of sheets.

Therefore it would be favourable to use an intrinsic flame retardant material, like chlorinated polyethylene (CPE), comprising fillers, plasticizers and additives to achieve the desired allover properties. An alternative abbreviation for chlorinated polyethylene is CM according to DIN ISO 1629. CPE has a saturated backbone and thus a high UV and aging resistance. Furthermore, CPE can be crosslinked and therefore achieves a much higher temperature resistance.

DE1769861 discloses an expanded CPE material, comprising organic crosslinking agents and blowing agents, preferably chemical blowing agents. Additional polymers, fillers, flame retardants, etc. can be added. Therefore, such material has a good fire resistance, thermal resistance as well as UV, weathering and aging resistance and improved flexibility. Nevertheless, such approach has several drawbacks: Crosslinking and expansion are handled in a two-step process, means in a first step the material is heated to a temperature above the crosslinking temperature but below the decomposition temperature of the blowing agent. After crosslinking is completed, the material is - in a second step - heated up to a temperature above the decomposition temperature of the blowing agent to expand the material. Such approach has several drawbacks: the level of fillers and further additions is very limited, because the softening of the crosslinked polymer is absolutely essential to enable expansion of the material, especially when targeting low densities. Additionally, the expansion needs to be handled in a mould, which is not an applicable method for the manufacturing of tubes in general and large-scale production of sheets.

DE2734979 shows comparable drawbacks like DE1769861: crosslinking and expansion are also carried out in a two-step process. Furthermore, this invention discloses an additional disadvantage of such a process: the best results can only be achieved when manufacturing a thickness between 0,54mm and 10,2mm. Thicknesses above that cannot be produced, because only the surface will expand and the core will stay massive and rigid. Hence, such approaches are not applicable for insulation purposes, where thicknesses up to 50mm (or even above) are required.

DE19943547 seems to overcome the disadvantages concerning such two-step crosslinking and expansion process. The use of fillers, additives and plasticizers is, however, again very limited, especially when low densities are targeted. Therefore, the modification and adjustment of the final material properties is very limited. It can be expected that crosslinking will definitely occur during extrusion at 130°C when using peroxyketals. Furthermore, the high temperature of 190°C leads to a very short crosslinking time of such peroxides, while the blowing agent starts expansion after some time (decomposition temperature of azodicarbonamide usually >200°C). For this reason, crosslinking and expansion still occur one after another.

US4477599 discloses an expanded, low density, crosslinked polyvinylchloride (PVC) material. The material comprises very high levels of filler loadings (see US4477599, example 1 to 4). Organic solvents are used to mix the fillers and PVC. Unfortunately, the expansion needs to be handled in a mould or hot press, leading to aforementioned disadvantages and the crosslinking again occurs prior to the expansion (at temperatures between 40-60°C). Additionally, the solvent has to be removed in a dryer for one or two days. After removing the solvent - due to the absence of any plasticizers - a rigid material will be formed. This leads again to the aforementioned disadvantages.

US 2012/0135221 relates to an expanded material for thermal and/or acoustic insulation, the material comprises as a polyemeric component 100 phr SBR and 100 phr CPE.

A major objective of the present invention is to provide a versatile, flame retardant, low smoke generating material that can be modified in a wide range by using fillers, additives, plasticizers, etc. A further target is to have a low thermal conductivity and high WVT value as well as high temperature resistance and easy applicability. Additionally, the material should have good resistance against UV, aging, weathering and chemicals. Furthermore, it should be processible using standard methods of the rubber industry.

Surprisingly, it is found that such a versatile FEF material not showing the aforementioned disadvantages can be achieved by expanding a polymer (blend) comprising chlorinated polyethylene and further chlorinated organic polymers. The material furthermore comprises at least one crosslinking agent, at least one chemical blowing agent, at least one filler and at least one plasticizer and optionally further additivation to fulfil modem regulations and approvals in the respective application field.

The claimed material comprises at least one layer of expanded polymer (blend). All quantities concerning the claimed material are related to a total of 100phr of polymer content. The total amount always comprises the aforementioned 100phr of the polymer, too. The overall quantities of all ingredients sum up to at least 300 phr, preferably at least 400 phr but less than 1200 phr, preferably less than 1000 phr, especially preferred less than 800phr. This means that the polymer content related to the overall quantity of all ingredients is ≤ 33,3 wt% (percent by weight), preferably ≤ 25,0 wt%, but > 8,3 wt%, preferably > 10,0 wt%, especially preferred > 12,5 wt%. Higher polymer contents show several drawbacks, e.g. worse fire performance, while lower polymer contents e.g. decrease the flexibility and mechanical resistance of the claimed material.

The 100phr of the polymer content comprise at least one chlorinated polyethylene polymer (subsequently including homopolymer and/or copolymers), preferably at least one chlorinated polyethylene homopolymer (CPE). If the material comprises e.g. 60phr of CPE, the amount of CPE related to the polymer content is 60,0 wt%. Related to a total amount of e.g. 1000phr, the amount of CPE (in such case) would be 6,0 wt%. The given percentages are rounded to the first decimal place.
The chlorinated polyethylene homopolymer (CPE) shows a chlorine content of at least 20 wt%, preferably at least 25 wt%, especially preferred at least 35 wt% and higher (according to ISO 1158). The chlorinated polyethylene homopolymer is present in the formulation to at least 60 phr (at least 60 parts per hundred rubber, means, it represents at least 60 percent of the polymer content of the claimed material), preferably at least 70 phr, especially preferred at least 80 phr, but maximum 100 phr. A chlorine content of 25 wt% or higher leads to a material of elastomeric behaviour, while a chlorine content of at least 35 wt% abolishes the crystallinity of the polyethylene segments, leading to a material of higher flexibility.

The polymer content of the claimed material may further comprise at least 5 phr, preferably at least 10 phr, especially preferred at least 20 phr of at least one further chlorinated organic polymer, preferably polyvinylchloride (PVC), chlorosulfonated polyethylene (CSM) or polychloroprene (CR). Such halogenated polymers are beneficial for fire resistance and low smoke emission according to EN ISO 13823. Furthermore, the crosslinking of the material is enhanced, which helps to produce material with densities below 50 kg/m³.

Additionally, the polymer content of the claimed material may comprise all kind of elastomers or thermoplastic elastomers, like - but not restricted to - ACM/AEM, AU/EU, BR, BIIR, CIIR, (G)(E)CO, EPM/EPDM, EVM, SBR, (H)NBR, FKM/F(E)PM, GPO, IR, IIR, (V)MQ, NR, T. Furthermore, the claimed material may comprise further polymers like - but not limited to - PE, PP, PET, PBT, PC, PS, PA, PU, PTFE, PMMA etc.

The claimed material may further comprise at least 30 phr, preferably at least 100 phr, especially preferred at least 200 phr of inorganic filler, preferably of metal and/or half metal chalcogen (i.e. compound of oxygen, sulphur) nature. The inorganic filler may be an aluminium compound, such as aluminium silicates, oxides, hydroxides etc., e.g. ATH (aluminium hydroxide), and/or a silicon based compound, such as silicates, quartz, zeolites etc., or mineral based accordingly, e.g. on gypsum, clay, perlite, vermiculite, chalk, slate, graphite, talc/mica etc., or any mixtures thereof. Preferred are inorganic fillers that cool down the fire, e.g. by releasing water, preferably at temperatures above 180°C, or dilute or prevent the oxygen supply of the flame, e.g. by the release of carbon dioxide, carbon monoxide, etc, preferably at temperatures above 180°C. Especially preferred are aluminium hydroxide (ATH) and magnesium hydroxide due to the high level of water release. Furthermore, such materials do not increase the smoke development.

The claimed material may comprise at least 10 phr, preferably at least 30 phr, especially preferred at least 50 phr - related to the polymer content - of at least one plasticizer. The plasticizers should have a positive impact on the fire retardancy. Therefore, preferred plasticizers are phosphate plasticizers or halogen containing plasticizers or any mixture thereof. The halogen containing plasticizers are preferably chlorinated paraffins and/or chlorinated fatty acid substituted glycerines and/or chlorinated alpha-olefins (especially preferred are long chain chlorinated plasticizers of C > 17) having a chlorine content of at least 20 wt%, preferably at least 40wt%, especially preferred at least 60 wt% according to DIN 53474. Such highly chlorinated, long chain materials have the greatest fire retardant impact and are - in contrast to short or medium chain chlorinated plasticizers - not persistent, bio-accumulative or toxic. Furthermore, such plasticizers have less negative impact on smoke development in comparison to brominated flame retardants. The phosphate plasticizers can be aliphatic, chloroaliphatic or aromatic phosphoric acid esters or any combinations thereof. Preferred are phosphoric acid esters of high phosphorous content and low smoke development, especially preferred is diphenyl 2-ethylhexyl phosphate (DPO) due to its marginal smoke emission, low viscosity and low temperature resistance.

The claimed material furthermore may comprise at least one crosslinking system such as peroxides, triallylcyanurate, triallylisocyanurate , phenylmaleimide, thiadiazoles, fatty acid amide, hydrosilylation agents, radiation activators (for radiation or UV curing), sulphur systems, bisphenolics, metal oxides etc. Preferred are substances that thermally decompose to liberate a radical, especially preferred are peroxides (including TAC/TAIC), thiadiazoles (including fatty acid amide), metal oxides and - in case of polymer blends comprising unsaturated polymers - sulphur systems. The choice of the curing system is affected by the presence and/or amount of unsaturated bonds in the polymer blends backbone. Polymer blends with saturated polymer main chains can only be cured with peroxides and - in case of halogenated polymers like CPE or CSM - with thiadiazol curing systems as well. Also, peroxide and thiadiazol cured materials are preferred, because they show higher temperature and UV stability than sulfur cured materials. C-C and C-O bonds that are created during peroxide and/or thiadiazol vulcanisation are more resistant to high temperatures and UV irradiation than the C-S bonds of a sulfur vulcanisation.

The claimed material additionally may comprise at least one chemical blowing agent (e.g. releasing carbon dioxide, nitrogen, oxygen or water) chosen from the classes of organic blowing agents and/or inorganic blowing agents. Preferred are organic blowing agents of nitroso type, azo type and/or aromatic hydrazide type, especially preferred are azo type blowing agents like azodicarbonamide.

The claimed material may comprise at least one synergist for the halogenated flame retardants and/or halogen containing plasticizers / polymers, e.g. antimony trioxide, zinc stannate, zinc hydroxystannate, 2,3-Dimethyl-2,3-diphenylbutane, bismuth oxychloride etc. Preferred are bismuth (Bi) and/or zinc (Zn) based materials, especially preferred are zinc stannate and bismuth oxychloride. A synergist increases the effectivity of the flame retardants in the reaction to fire in terms of smoke suppression and/or heat release. Depending on the grade of the desired fire retardancy only combinations of a synergist and conventional fire retardants can achieve the desired results.

The claimed material furthermore may comprise a heat and/or reversion stabilizer system. The stabilizers can be chosen from the classes of carbon blacks, metal oxides (e.g. iron oxide) and hydroxides (e.g. magnesium hydroxide), metal organic complexes, radical scavengers (e.g. tocopherol derivates), complex silicates (e.g. perlite, vermiculite), and combinations thereof.

The claimed material may further comprise flame retardants (preferably polymeric flame retardants) and synergists, biocides, plasticizers, stabilizers (e.g. versus UV, ozone, reversion etc.), colours etc., of any kind in any ratio, including additives for improving its manufacturing, application, aspect and performance properties, such as inhibitors, retarders, accelerators, etc.; and/or additives for adapting it to the applications needs, such as char-forming and/or intumescent additives, like expanding graphite, to render the material self-intumescent in case of fire, e.g. for general protection purposes and/or to close and protect e.g. wall and bulkhead penetrations; and/or substances that will lead to a self-ceramifying effect to pipes, wall penetrations etc. in case of fire, such as boron compounds, silicon containing compounds etc.; and/or internal adhesion promoters to ensure self-adhesive properties in co-extrusion and co-lamination applications, such as silicate esters, functional silanes, polyols, etc.

All of the aforementioned ingredients show easy mixing and good dispersion in a wide range of dosage.

The claimed material can be mixed by standard methods widespread in the rubber industry, e.g. in a (Banbury^{®}) mixer, on a mill, in an extruder etc. No specialized equipment is necessary to achieve a good dispersion. The shaping of the claimed material can be carried out in extruders, presses, calanders etc. Extruders are preferred due to the possibilities to easily form sheets and tubes and to directly run them continuously through a hot air oven, salt bath etc. Preferred are hot air ovens, because in the case of a salt bath, additional cleaning steps are necessary.
The claimed material can be expanded and crosslinked to a density < 100 kg/m³, preferably < 70 kg/m³, especially preferred < 55 kg/m³ according to DIN EN ISO 845. Densities of < 70 kg/m³ and in particular < 55 kg/m³ are preferred as they lead to a lower thermal conductivity.

A major advantage of the claimed material is the suitability for applications where low flame spread and low smoke generation are required. The claimed material is classified as B-s1,d0 (all kind of tubes and sheets up to 10mm wall thickness) and B-s2,d0 (sheets > 10mm wall thickness) according to EN ISO 13823 and achieves at least a reliable 25/50 classification according to ASTM E84 / CAN ULC S 102. It is a linked advantage of the claimed material that it can achieve such classifications without the use of critical chemicals that contain antimony, bromine or boron, as they are still widespread and standard in the industry. The claimed material also does not require any additional coverings, coatings, etc. to achieve such classifications.

It is a further advantage of the claimed material that it provides easy mounting due to its high flexibility. Its ability of reversible elongation of 50% of original length and its elongation at break of 100% or even higher (according to DIN EN ISO 1798) of original length allows it to be mounted on tightly bent piping without further cutting. In contrast, PEFs in general show drawbacks concerning the reversible elongation and therefore also the mounting properties. The reversible elongation of PEFs is only caused by the deformation, means stretching of the cells. The elasticity of the PEF material itself is very limited. The reversible elasticity of PEFs is significantly below 50%, more particularly below 25%. The elongation at break of PEFs is even below 50%, more particularly below 30%.

It is a prominent advantage of the claimed material that it can easily be glued with standard polychloroprene based contact adhesives, acrylate and/or styrene block copolymer based pressure sensitive adhesives (PSAs) and/or hot melt adhesives which leads to air and water tight sealings.

The claimed material provides high water vapor transmission (WVT) values of ≥ 7.000 or even ≥ 10.000 according to EN13469 / EN 12086. Therefore, the material can be used for low temperature insulation (< 0°C), because the object to be insulated is well protected from under insulation corrosion (UIC) through condensation of humidity. It is a linked advantage that the material has a high degree of closed cells, determined by a vacuum water absorption of < 5,0%, preferably < 2,5% according to ASTM D 1056.

Another advantage of the claimed material is the excellent UV, aging and weathering resistance. The material can be used for outdoor applications without any additional coverings or coating.

A major advantage is the excellent suitability of the material for thermal and acoustic insulation applications. According to DIN EN ISO 8497/ DIN EN 12667, the material achieves a thermal conductivity of ≤ 0,040 W/m*K, at densities below 55kg/m³ it achieves a thermal conductivity of ≤ 0,036 W/m*K at 0°C according to DIN EN 12667 / DIN EN ISO 8497.

A further advantage of the claimed material is its versatility regarding its properties due to manifold possibilities of using fillers, plasticizers, flame retardants, additives, crosslinkers, etc. in various amounts and combinations. The aforementioned ingredients show easy mixing and good dispersion in a wide range of dosage.

It is a prominent advantage of the claimed material that the viscosity significantly decreases during vulcanization/expansion due to the melting of CPE and thus absorbs excess enthalpy created by the exothermic expansion process. This leads to a very stable, tolerant and robust manufacturing process.

Another advantage of the claimed material is its versatility regarding the production equipment. It can be produced in an economic way in a continuous process, e.g. by extrusion, extrusion and co-lamination or direct co-extrusion. The material can also be laminated, moulded, co-moulded, overmoulded, welded etc. directly as mono- or multilayer system and thus it can be applied in unrestricted shaping onto various surfaces in automotive, transport, aeronautics, building and construction, marine and offshore, furniture, machinery engineering and many other industries, even by thermoforming or other shaping methods. The claimed material can particularly be manufactured in the form of tubes and sheets in a continuous process in various wall thicknesses and inner diameters; most suitable are wall thicknesses between 3 and 50mm. Wall thicknesses above 50mm tend to have some drawbacks regarding their technical properties.

A further advantage of the claimed material is its significantly lower shrinkage (even at higher temperatures, means above 100°C), especially when compared to the currently widely used EPDM based materials.

Another advantage of the claimed material is that no questionable plasticizers are needed, like phthalate plasticizers, short or medium chain chlorinated paraffins (C<18) which are suspected of being e.g. persistent, bio-accumulative, toxic etc.

### EXAMPLES

The following examples and comparative examples have been produced in a three step production process: the mixing of compounds, the extrusion process and the expansion and crosslinking of the extrudate.

The compounds have been mixed in an internal mixer with an average mixing time of 10 minutes and an average dumping temperature of 120°C. The compounds have then been homogenized further on a roller mill and the crosslinking system and azodicarbonamide as blowing (expansion) agent were added as it is standard in the industry.

The extrusion has been performed on a strip feeded single screw vacuum extruder providing raw unexpanded sheets and tubes. Those have then been crosslinked and expanded simultaneously in a hot air oven cascade of 5 ovens to sheets of 25 mm wall thickness and tubes of 25 mm wall thickness and 22 mm inner diameter. Table 1 lists the raw materials used for the compounds. Table 2 gives an overview of all tested materials. Table 3 shows the recipes of the compounds. Examples 11a,11b and 11c are produced from the same compound but differ in the achieved density of the expanded product.

**Table 1: Raw materials**

| **Chemical name** | **Trade name** | **Supplier** |
|---|---|---|
| Chlorinated Polyethylene (CPE) | Elaslen^{®} 401AY | Showa Denko, Japan |
| Polychloroprene (CR) | Baypren^{®} 611 | Lanxess, Germany |
| Chlorosulfonated Polyethylene (CSM) | TOSO-CSM^{®} TS-430 | Tosoh Corporation |
| Polyvinylchloride (PVC) | Vinnolit^{®} S3265 | Vinnolit, Germany |
| Aluminium Trihydroxide (ATH) | Martinal^{®} 111LE | Martinswerk, Germany |
| Carbon Black (CB) | Corax N550 | Evonik Industries, Germany |
| Chloroparaffin (CP) | Chlorparaffin 50 | Leuna, Germany |
| Zinc Stannate (ZS) | ZB 467 | Great Lakes, U.S.A. |
| Bismutoxychloride (BO) | BiOCl4 | Alpha Chemicals |
| Diphenyl 2-ethylhexyl phosphate (DPO) | Disflamoll^{®} DPO | Lanxess, Germany |
| Antimonytrioxide (SB) | Antimontrioxid | GMS-Chemie, Germany |

Table 2 shows an overview of the tested materials and their compositions. All materials except from competitor material 6 were available as 25mm sheets and tubes in 25mm wall thickness and 22mm inner diameter. Competitor material 6 is only available as tubes. It was tested in 25mm wall thickness and 22mm inner diameter.

**Table 2: Comparative materials and innovative examples**

| No. | | Base Polymer | Flame retardant | Miscellaneous |
|---|---|---|---|---|
| 1* | AF/Armaflex^{®} | NBR/PVC | Brominated/antimony | ATH filled, crosslinked |
| 2* | NH/Armaflex^{®} | NBR | halogen free | ATH filled, crosslinked |
| 3* | HT/Armaflex^{®} | EPDM | Brominated/antimony | ATH filled, crosslinked |
| 4* | Kaiffex^{®}KK | NBR/PVC | Brominated/antimony | ATH filled, crosslinked |
| 5* | Kaiflex^{®}BluEco | NBR | halogen free | ATH filled, crosslinked |
| 6* | Competitor material | PE/CPE | halogenated | >80% polymer, not crosslinked |
| 7* | Armaflex Ultima | CR | chlorinated paraffin | ATH filled, crosslinked |
| 8 | | CPE/CR | chlorinated paraffin | ATH filled, crosslinked |
| 9 | | CPE/PVC | chlorinated paraffin | ATH filled, crosslinked |
| 10 | | CPE/CSM | chlorinated paraffin | ATH filled, crosslinked |
| 11 | | CPE | chlorinated paraffin | ATH filled, crosslinked |
| 12 | | CPE | chlorinated paraffin | ATH filled, crosslinked |
| 13 | | CPE | chlorinated paraffin | ATH filled, crosslinked |
| 14 | | CPE | DPO | ATH filled, crosslinked |
| 15 | | CPE | DPO | low ATH filled, crosslinked |

| | | | | |
|---|---|---|---|---|
| * = comparative materials | | | | |

**Table 3: CPE compounds (all innovative examples)**

| | | | | |
|---|---|---|---|---|
| | | **crosslinking system** | | |

| **No.** | **Composition (in phr = parts per hundred rubber)** | **Metal oxide** | **Thiadiazol** | **Peroxide** |
|---|---|---|---|---|
| 8 | 70 CPE, 30 CR, 240 ATH, 90 CP, 3 BO, 2 CB | X | | |
| 9 | 80 CPE, 20 PVC, 280 ATH, 120 CP, 3 ZS, 2 CB | | | X |
| 10 | 60 CPE, 40 CSM, 180 ATH, 100 CP, 2 ZS, 2 CB | | X | |
| 11 | 100 CPE, 220 ATH, 110 CP, 2 ZS, 1 CB | | X | |
| 12 | 100 CPE, 240 ATH, 130 CP, 3 BO, 2 CB | | | X |
| 13 | 100 CPE, 240 ATH, 130 CP, 3 SB, 2 CB | | | X |
| 14 | 100 CPE, 240 ATH, 80 DPO, 3 BO, 2 CB | | | X |
| 15 | 100 CPE, 130 ATH, 40 DPO, 3BO, 2 CB | | | X |

Table 4 presents the flammability test results of the different materials. The SBI test has been performed on both tubes and sheets, where possible, DIN 4102-1 has been performed on tubes only and ASTM E84 and the EN45545 have been performed on sheets only.

**Table 4: Flammability test results**

| **Material** | **SBI of sheets/tubes EN 13823/13501-1** | **tubes DIN 4102-1** | **sheets ASTM E84** | **sheets EN 45545** |
|---|---|---|---|---|
| 1* | B-s3, d0 | B1 | 08/300 | R1/HL1 |
| 2* | E/D-s3,d0 | -/B2 | 48/333 | R1/HL1 |
| 3* | D-s3,d0/C-s3,d0 | B2/B1 | 08/311 | - |
| 4* | C-s3, d0 | B1 | - | - |
| 5* | E | - | - | R1/HL1 |
| 6* | - / B-s1, d0 | B1 | - | - |
| 7* | B-s2,d0/B-s1,d0 | B1 | 05/40 | R1/HL2 |
| 8 | B-s2,d0/B-s1,d0 | B1 | 12/40 | R1/HL2 |
| 9 | B-s2,d0/B-s1,d0 | B1 | 07/47 | R1/HL2 |
| 10 | B-s2,d0/B-s1,d0 | B1 | 09/41 | R1/HL2 |
| 11a | B-s2,d0/8-s1,d0 | B1 | 11/42 | R1/HL2 |
| 12 | B-s2,d0/B-s1,d0 | B1 | 05/48 | R1/HL2 |
| 13 | B-s3,d0/B-s2,d0 | B1 | 09/132 | R1/HL2 |
| 14 | B-s2,d0/B-s1,d0 | B1 | 18/32 | R1/HL2 |
| 15 | C-s3,d0/C-s2,d0 | B1 | 109/82 | R1/HL2 |

| | | | | |
|---|---|---|---|---|
| * = comparative materials | | | | |

Table 5 gives an overview of the measured mechanical properties of the materials and their insulation properties. Minimum service temperature has been determined by measurement of the lowest temperature at which the material remains flexible and can be bent without permanent deformation. Samples 11a - 11c show the dependence of materials properties from different densities made of the same compound. Linear shrinkage has been determined by length measurement on tubes before and after conditioning of samples at 110°C for 24h.

**Table 5: Mechanical and insulation properties**

| **Material** | **Density** | **Thermal conductivity** | **Water Vapour Barrier** | **softening temp.** | **min. service temp.** | **UV Stability** | **max. Elongation at break** | **lin. shrinkage** |
|---|---|---|---|---|---|---|---|---|
| | **ISO 845 [kg/m³]** | **EN 12667 λ [W m-1 K-1] at 0°C,** | **EN 12086 WVT µ** | **[°C]** | **[°C]** | **Xenon weathering test 1000h Grade** | **ISO 37 [%]** | **DIN ISO 2796 [%] 4h,100°C** |
| 1* | 56 | ≤ 0,033 | ≥ 10000 | 110 | -50 | 3 | 90 | 2,0 |
| 2* | 61 | ≤ 0,035 | ≥ 4000 | 110 | -50 | 3 | 90 | 2,0 |
| 3* | 65 | ≤ 0,036 | ≥ 4000 | 150 | -50 | 2 | 100 | 7,0 |
| 4* | 59 | ≤ 0,034 | ≥ 10000 | 110 | -50 | 3 | 90 | - |
| 5* | 66 | ≤ 0,037 | ≥ 6000 | 110 | -50 | 3 | 90 | - |
| 6* | 32 | ≤ 0,040 | ≥ 6000 | 100 | 0 | 1 | 20 | - |
| 7* | 61 | ≤ 0,040 | ≥ 7000 | 110 | -40 | 4 | 100 | 3,0 |
| 8 | 48 | ≤ 0,035 | ≥ 10000 | 120 | -40 | 2 | 110 | 2,0 |
| 9 | 49 | ≤ 0,036 | ≥ 10000 | 140 | -40 | 1 | 100 | 3,0 |
| 10 | 48 | ≤ 0,035 | ≥ 9000 | 140 | -40 | 2 | 110 | 2,0 |
| 11a | 50 | ≤ 0,035 | ≥ 8500 | 150 | -40 | 1 | 100 | 1,5 |
| 11b | 61 | ≤ 0,038 | ≥ 9200 | 150 | -40 | 1 | 110 | 1,5 |
| 11c | 87 | ≤ 0,041 | ≥ 10000 | 150 | -40 | 1 | 110 | 2,0 |
| 12 | 51 | ≤ 0,035 | ≥ 8000 | 150 | -40 | 1 | 100 | 1,5 |
| 13 | 50 | ≤ 0,036 | ≥ 9000 | 150 | -40 | 1 | 100 | 1,5 |
| 14 | 52 | ≤ 0,036 | ≥ 8500 | 150 | -60 | 1 | 100 | 1,5 |
| 15 | 50 | ≤ 0,036 | ≥ 7000 | 150 | -60 | 1 | 110 | 1,5 |

| | | | | | | | | |
|---|---|---|---|---|---|---|---|---|
| * = comparative materials | | | | | | | | |

## Claims

1. An expanded polymeric material which consists of at least 300 phr, but less than 1200 phr ingredients in total, comprising 100 phr of at least one polymer, of which at least 60 phr is chlorinated polyethylene (CPE).

2. The material according to claim 1, which consists of at least 400 phr, but less than 1000 phr, preferred less than 800 phr ingredients in total, comprising 100 phr of at least one polymer, of which at least 70 phr, preferably at least 80 phr is chlorinated polyethylene (CPE).

3. The material according to claim 1 or 2, wherein the chlorinated polyethylene (CPE) shows a chlorine content of at least 20 wt%, preferably at least 25 wt%, especially preferred at least 35 wt% according to ISO 1158.

4. The material according to claim 1, 2 or 3, comprising at least one further chlorinated organic polymer which is present in the formulation in at least 5 phr, preferably at least 10 phr, especially preferred at least 20 phr.

5. The material according to any of claims 1 to 4, which is crosslinked by a crosslinking system.

6. The material according to claim 5, wherein the crosslinking system comprises thiadiazole and/or peroxides and/or sulphur crosslinking systems, preferably thiadiazole and/or peroxides.

7. The material according to any of claims 1 to 6, comprising at least one plasticiser which is present in the formulation in at least 10 phr, preferably at least 30 phr, especially preferred at least 50 phr.

8. The material according to claim 7, wherein at least one plasticizer is a halogenated plasticizer, preferably a chlorinated plasticizer (chlorinated paraffin and/or chlorinated fatty acid substituted glycerin and/or chlorinated alpha-olefin), especially preferred a long chain chlorinated plasticizer with a minimum chain length of C > 17 having a chlorine content of at least 20 wt%, preferably at least 40 wt%, especially preferred at least 60 wt% according to DIN 53474.

9. The material according to claim 7, wherein at least one plasticiser is a phosphate plasticizer, preferably a phosphoric acid ester, especially preferred diphenyl-2-ethylhexyl phosphate (DPO).

10. The material according to any of claims 1 to 9, comprising at least 100 phr, preferably at least 150 phr especially preferred at least 200 phr of at least one inorganic filler.

11. The material according to claim 10, wherein the inorganic filler is of metal and/or half metal chalcogen nature, preferred are inorganic fillers that release water and/or carbon dioxide and/or carbon monoxide at temperatures above 180°C, especially preferred are aluminium hydroxide and magnesium hydroxide.

12. The material according to any of claims 1 to 11, comprising at least one synergist preferably a Bi or Zn based material, especially preferred are oxychloride and/or stannate.

13. The material according to any of claims 1 to 12, which is expanded to a density of less than 100 kg/m³, preferably less than 70 kg/m³, especially preferred less than 55 kg/m³ according to DIN EN ISO 845.

14. The material according to any of claims 1 to 11, having a maximum elongation at break of at least 50%, preferably at least 70%, especially preferred at least 100% according to ISO 37.

15. The material according to any of claims 1 to 14, which has a closed cell structure, determined by a vacuum water absorption of < 5,0%, preferably < 2,5% according to ASTM D 1056.

16. The material according to any of claims 1 to 15, which is glued with standard chloroprene based contact adhesives, acrylate and/or styrene block copolymer based pressure sensitive adhesives (PSAs) and/or hot melt adhesives.

17. A process for manufacturing the material according to any of claims 1 to 16, wherein the polymeric material is expanded by decomposition of a chemical blowing agent, preferably of nitroso type, azo type and/or aromatic hydrazide type, especially preferred is azodicarbonamide.

18. The use of a material according to any of claims 1 to 16 for thermal and/or acoustic insulation.

## Patentansprüche

1. Geschäumtes Polymermaterial, bestehend aus wenigstens 300 phr, jedoch weniger als 1200 phr Komponenten insgesamt, umfassend 100 phr wenigstens eines Polymers, von denen wenigstens 60 phr auf chloriertes Polyethlyen (CPE) entfallen.

2. Material nach Anspruch 1, bestehend aus wenigstens 400 phr, jedoch weniger als 1000 phr, bevorzugt weniger als 800 phr Komponenten insgesamt, umfassend 100 phr wenigstens eines Polymers, von denen wenigstens 70 phr, vorzugsweise mindestens 80 phr auf chloriertes Polyethlyen (CPE) entfallen.

3. Material nach Anspruch 1 oder 2, wobei das chlorierte Polyethylen (CPE) einen Chlorgehalt von wenigstens 20 Gew.-%, vorzugsweise wenigstens 25 Gew.-% und besonders bevorzugt wenigstens 35 Gew.-% nach ISO 1158 aufweist.

4. Material nach Anspruch 1, 2 oder 3, umfassend wenigstens ein weiteres chloriertes organisches Polymer, das in der Formulierung mit wenigstens 5 phr, vorzugsweise mit wenigstens 10 phr und besonders bevorzugt mit wenigstens 20 phr vorliegt.

5. Material nach einem der Ansprüche 1 bis 4, das durch ein Vernetzungssystem vernetzt ist.

6. Material nach Anspruch 5, wobei das Vernetzungssystem Thiadiazol und/oder Peroxide und/oder Schwefelverneztungssysteme, vorzugsweise Thiadiazol und/oder Peroxide umfasst.

7. Material nach einem der Ansprüche 1 bis 6, umfassend wenigstens einen Weichmacher, der in der Formulierung mit wenigstens 10 phr, vorzugsweise mit wenigstens 30 phr und besonders bevorzugt mit wenigstens 50 phr vorliegt.

8. Material nach Anspruch 7, wobei wenigstens ein Weichmacher ein halogenierter Weichmacher, vorzugsweise ein chlorierter Weichmacher (chloriertes Paraffin und/oder durch chlorierte Fettsäure substituiertes Glycerin und/oder chloriertes α-Olefin, besonders bevorzugt ein langkettiger chlorierter Weichmacher mit einer Mindestkettenlänge von C > 17 mit einem Chlorgehalt von wenigstens 20 Gew.-%, vorzugsweise von wenigstens 40 Gew.-% und besonders bevorzugt von wenigstens 60 Gew.-% nach DIN 53474 ist.

9. Material nach Anspruch 7, wobei wenigstens ein Weichmacher ein Phosphatweichmacher, vorzugsweise ein Phosphorsäureester, besonders bevorzugt Diphenyl-2-ethylhexylphosphat (DPO) ist.

10. Material nach einem der Ansprüche 1 bis 9, umfassend wenigstens 100 phr, vorzugsweise wenigstens 150 phr und besonders bevorzugt wenigstens 200 phr wenigstens eines anorganischen Füllers.

11. Material nach Anspruch 10, wobei ein anorganischer Füller aus Metall und/oder aus einem Halbmetall vom Chalcogencharakter besteht, wobei anorganische Füller bevorzugt sind, die Wasser und/oder Kohlendioxid und/oder Kohlenmonoxid bei Temperaturen von über 180 °C freisetzen, wobei Aluminiumhydroxid und Magenisumhydroxid besonders bevorzugt sind.

12. Material nach einem der Ansprüche 1 bis 11, umfassend wenigstens einen Synergisten, vorzugsweise ein Material auf Bi- oder Zn-Basis, insbesondere Oxychlorid und/oder Stannat.

13. Material nach einem der Ansprüche 1 bis 12, das bis zu einer Dichte von unter 100 kg/m³, vorzugsweise von unter 70 kg/m³, besonders bevorzugt von unter 55 kg/m³ nach DIN EN ISO 845 geschäumt ist.

14. Material nach einem der Ansprüche 1 bis 11, mit einer maximal Bruchdehnung von wenigstens 50 %, vorzugsweise von wenigstens 70 % und besonders bevorzugt von wenigstens 100 % nach ISO 37.

15. Material nach einem der Ansprüche 1 bis 14, das eine geschlossenzellige Struktur aufweist, ermittelt durch eine Vakuumwasserabsorption von < 5,0 %, bevorzugt < 2,5 % nach ASTM D 1056.

16. Material nach einem der Ansprüche 1 bis 15, das mit Standardkontaktklebern auf Chloroprenbasis, druckempfindlichen Klebern auf Acrylat- und/oder Styrolblockcopolymer-Basis (PSAs) und/oder Heißklebern verklebt ist.

17. Verfahren zur Herstellung des Materials nach einem der Ansprüche 1 bis 16, wobei das Polymermaterial durch Zersetzung eines chemischen Blähmittels, vorzugsweise vom Nitroso-, Azo-Typ und/oder aromatischem Hydrazid-Typ, wobei Azodicarbonamid besonders bevorzugt ist, geschäumt ist.

18. Verwendung eines Materials nach einem der Ansprüche 1 bis 16 für die Wärme- und/oder Schallisolierung.

## Revendications

1. Matériau polymère expansé qui est constitué par des ingrédients à concurrence d'au moins 300 phr, mais de moins de 1200 phr au total, comprenant 100 phr d'au moins un polymère, dont au moins 60 phr représentent du polyéthylène chloré (CPE).

2. Matériau selon la revendication 1, qui est constitué par des ingrédients à concurrence d'au moins 400 phr, mais de moins de 1000 phr, de préférence de moins de 800 phr au total, comprenant 100 phr d'au moins un polymère, dont au moins 70 phr, de préférence au moins 80 phr représentent du polyéthylène chloré (CPE).

3. Matériau selon la revendication 1 ou 2, dans lequel le polyéthylène chloré (CPE) possède une teneur en chlore d'au moins 20 % en poids, de préférence d'au moins 25 % en poids, de manière particulièrement préférée d'au moins 35 % en poids selon la norme ISO 1158.

4. Matériau selon la revendication 1, 2 ou 3, comprenant au moins un polymère organique chloré supplémentaire qui est présent dans la formulation à concurrence d'au moins 5 phr, de préférence au moins 10 phr, de manière particulièrement préférée d'au moins 20 phr.

5. Matériau selon l'une quelconque des revendications 1 à 4, qui est réticulé via un système de réticulation.

6. Matériau selon la revendication 5, dans lequel le système de réticulation comprend du thiadiazole et/ou des peroxydes et/ou des systèmes de réticulation à base de soufre, de préférence du thiadiazole et/ou des peroxydes.

7. Matériau selon l'une quelconque des revendications 1 à 6, comprenant au moins un plastifiant qui est présent dans la formulation à concurrence d'au moins 10 phr, de préférence d'au moins 30 phr, de manière particulièrement préférée d'au moins 50 phr.

8. Matériau selon la revendication 7, dans lequel ledit au moins un plastifiant représente un plastifiant halogéné, de préférence un plastifiant chloré (de la paraffine chlorée et/ou du glycérol substitué avec un acide gras chloré et/ou une alpha-oléfine chlorée), de manière particulièrement préférée un plastifiant chloré à longue chaîne possédant une longueur de chaîne minimale supérieure à 17 atomes de carbone, possédant une teneur en chlore d'au moins 20 % en poids, de préférence d'au moins 40 % en poids, de manière particulièrement préférée d'au moins 60 % en poids selon la norme DIN 53474.

9. Matériau selon la revendication 7, dans lequel ledit au moins un plastifiant représente un plastifiant à base de phosphate, de préférence un ester d'acide phosphorique, de manière particulièrement préférée du phosphate de diphényl-2-éthylhexyle (DPO).

10. Matériau selon l'une quelconque des revendications 1 à 9, comprenant au moins une matière de charge inorganique à concurrence d'au moins 100 phr, de préférence au d'moins 150 phr, de manière particulièrement préférée d'au moins 200 phr.

11. Matériau selon la revendication 10, dans lequel la matière de charge inorganique est de nature métallique et/ou semi-métallique-chalcogène, de préférence représente des matières de charge inorganiques qui libèrent de l'eau et/ou du dioxyde de carbone et/ou du monoxyde de carbone à des températures supérieures à 180 °C, et représente de manière particulièrement préférée de l'hydroxyde d'aluminium et de l'hydroxyde de magnésium.

12. Matériau selon l'une quelconque des revendications 1 à 11, comprenant au moins un agent synergique, de préférence une matière à base de Bi ou de Zn, qui représente de manière particulièrement préférée un oxychlorure et/ou un stannate.

13. Matériau selon l'une quelconque des revendications 1 à 12, qui est expansé jusqu'à concurrence d'une densité inférieure à 100 kg/m³, de préférence inférieure à 70 kg/m³, de manière particulièrement préférée inférieure à 55 kg/m³, selon la norme DIN EN ISO 845.

14. Matériau selon l'une quelconque des revendications 1 à 11, possédant un allongement maximal à la rupture s'élevant à au moins 50 %, de préférence à au moins 70 %, de manière particulièrement préférée à au moins 100 %, selon la norme ISO 37.

15. Matériau selon l'une quelconque des revendications 1 à 14, qui possède une structure du type à alvéoles fermées, déterminée par une absorption d'eau sous vide < 5,0 %, de préférence < 2,5 %, selon la norme ASTM D 1056.

16. Matériau selon l'une quelconque des revendications 1 à 15, qui est collée avec des adhésifs de contact standard à base de chloroprène, des adhésifs sensibles à la pression (PSA) à base d'acrylate et/ou d'un copolymère séquencé de styrène et/ou des adhésifs thermofusibles.

17. Procédé pour la fabrication du matériau selon l'une quelconque des revendications 1 à 16, dans lequel le matériau polymère est expansé par décomposition d'un agent gonflant chimique, de préférence de type nitroso, de type azoïque et/ou du type d'un hydrazide aromatique, et qui représente de manière particulièrement préférée un azodicarbonamide.

18. Utilisation d'un matériau selon l'une quelconque des revendications 1 à 16, pour une isolation thermique et/ou acoustique.
